# EUROPEAN PATENT APPLICATION

(11) **EP 3 319 033 A1**
(43) Date of publication of application: **09.05.2018**
(21) Application number: 16197202.1
(22) Date of filing: 04.11.2016
(51) Int. Cl.: G06Q 20/40, G06Q 20/28, G06Q 20/32, G06Q 20/42, G06Q 20/02

(54) **METHOD FOR AUTHORISING CARD PRESENT TRANSACTIONS ON A TRANSACTION TERMINAL**

(71) Applicant: Mastercard International Incorporated, New York, NY 10577 (US)
(72) Inventor: NISTOR, Ionut, 7 Dublin (IE); HOSNY, Ahmed, 18 Dublin (IE); GROARKE, Peter, 18 Dublin (IE)
(74) Representative: Murgitroyd & Company

(57) **Abstract**

A method for authorising card present transactions on a transaction terminal comprising initiating, on a user terminal, a transaction authorisation application, presenting, by the transaction authorisation application, at least one selection parameter for identifying at least one card present transaction to be authorised, prompting, responsive to identifying the at least one card present transaction to be authorised, authentication of a user for authorisation of the card present transaction, transmitting, responsive to authorisation of the at least one card present transaction by the user, a transaction authorisation confirmation according to the at least one selection parameter to a card network, and processing, responsive to receiving the transaction authorisation confirmation at the card network, the at least one card present transaction at the transaction terminal.

## Description

### Technical Field

The present disclosure relates to the field authorising card present transaction. More particularly, the present disclosure relates to a method for authorising card present transactions initiated by a user on a transaction terminal on a user terminal. Moreover, the disclosure relates to a computer program and a computer readable medium. The computer readable medium comprises computer-executable instructions, which, when executed by the respective devices being equipped with processors cause the devices to perform the method steps of the disclosure on the respective device interacting with the respective other device.

### Background

Payment cards, like credit or debit cards, are devices that enable the user of the card to make payments by electronic funds transfer. In most cases the payment card is associated to an account belonging to the user. Payment cards can either be used in so called card-present transaction, in which the physical card is directly used for the payment, but also for processing payments in which the card is not physically presented to a merchant for visual examination, so called card not present transactions, such as online use during e-commerce. As such, payments cards are commonly used in daily life as an additional means for processing payments and are supplementing or even substituting cash payments.

However, payment cards are also subject to fraud. In particular card not present transactions are vulnerable to fraud, as it is difficult for a merchant to verify that the actual cardholder is indeed authorizing a purchase. Accordingly, great efforts have been made for establishing additional security means for this kind of transaction.

The main focus of fraud prevention in card present transactions is set on cardholder verification obtained by the merchant, e.g. merchant's visual examination of the card and signature and PINs are used for further authentication. In addition, different algorithms, e.g. based on business rules and making use of neural networks are applied for fraud detection. Typically these detection rules are based characteristics of the transaction, such as transaction environment, merchant category and/or type of card. The decision based on the algorithms cause decline of a certain financial transaction and/or blocking of the payment card. These decisions can be taken at different levels of the payment process, e.g. at the card issuer and/or at the credit card network. However, irrespective of where the decision is taken, a general problem is, as the decisions are based on statistics and algorithms, such that false positive decisions resulting in unjustified payment declines and/or card blocking may occur. This requires the user to get in contact with the card issuer for unblocking the card or even for requesting issuance of a new card. Both delays processing of the transaction and is at least inconvenient for the user of the payment card.

Accordingly, in the light of the increasing importance of cashless living, there is a requirement to provide technical solutions to allow the user of a payment card to deal with false positive fraud detection decisions.

### Summary of the invention

The present disclosure provides one or more solutions to the problems and disadvantages existing due to false positive fraud detection without limiting the respective security means. Other technical advantages of the present disclosure will be readily apparent to one skilled in the art from the following description and claims.

The present disclosure is directed to a computer implemented method for authorising card present transactions on a transaction terminal comprising:
- initiating, on a user terminal, a transaction authorisation application;
- presenting, by the transaction authorisation application, at least one selection parameter for identifying at least one card present transaction to be authorised;
- prompting, responsive to identifying the at least one card present transaction to be authorised, authentication of a user for authorisation of the card present transaction;
- transmitting, responsive to authorisation of the at least one card present transaction by the user, a transaction authorisation confirmation according to the at least one selection parameter to a card network;
- processing, responsive to receiving the transaction authorisation confirmation at the card network, the at least one card present transaction at the transaction terminal.

The present disclosure includes multiple aspects for authorising card present transactions on a transaction terminal by a user of a payment card to be used for at least one card-present transaction. The payment card may be a credit card or a debit card associated to a bank account of the user, but also soft cards installed on a user terminal representing an electronic version of the actual payment card, for example in an electronic wallet or a payment app. The transaction terminal may be any terminal used for initiating card-present transactions which is capable to connect to a network. Non-limiting examples of transaction terminals are point-of-sale terminals or ATM machines or the like.

The user terminal may be any device connected to a network such as the internet and providing an interface to interact, directly or indirectly, with a card network and to receive instructions from the user to select and authorise a card present transaction to be processed, such as smartphones, personal computers, tablet computers configured to execute a respective application or capable to connect to a respective web-service over a network.

A transaction authorisation application may be a dedicated application for a user terminal and executed on the user terminal. Alternatively, the transaction authorisation application may be in the form of a plugin, an inFrame solution, an SDK or the like implemented on a website used for authorising financial transaction, e.g. a credit card payment interface. The transaction authorisation application may also provide a communication interface for the user to communicate with the card network.

The card network is an intermediary between an acquirer, i.e. the bank used by a merchant that processes and settles the merchant's payment card transactions with the help of a card issuer, i.e. a financial institution that issues payment cards to cardholders, and the issuer to authorize credit card transactions. The card network provides a server and database structure for automatically processing financial transactions. The card network links the transaction data, e.g. the purchase information to the corresponding card issuer information and processes the transactions requests accordingly. The card network may also provide additional information, such as user related information, e.g. mobile phone number, user terminal identifiers and the like, which may be used for additional tasks. In addition, the card network may store and provide authentication data and may also provide an authentication application in case the user authentication process is processed on the card network level.

After the transaction authorisation application is initiated by the user, either executed on the user terminal or accessed by or through the user terminal, a list of selection parameter for identifying at least one card present transaction to be authorised is presented to the user. The list of selection parameters may be in form of a database provided and updated by the card network or be part of the transaction authorisation application. Selection parameters may also be added by the user or captured by the user terminal. Non limiting examples for selection parameters are the location where the at least one card-present transaction will take place, either by defining or selecting the location from a list, by capturing the geo location of the user terminal, by selecting or elsehow identifying a transaction terminal, by selecting or defining a time point or time window, in which the at least one transaction will take place, by selecting at least one dedicated transaction which has been initiated prior to the authorization process. Non limiting examples for identifying transaction terminals are the identification via the merchant, via its location or the identification via a unique transaction terminal identifier which could be captured by the user terminal, e.g. by interpreting any kind of information provided by the transaction terminal to the user terminal, e.g. visual information such as a QR-code or electronic information transmitted via a corresponding communication channel, such as e.g. via NFC.

The user selects, via the transaction authorisation application, at least one selection parameter for identifying at least one card present transaction to be authorised. Responsive to the selection of the at least one selection parameter for identifying at least one card present transaction to be authorised, authentication of the user is prompted. Alternatively or in addition to this, the or an additional authentication process may take place prior to the selection of the selection parameter, e.g. when the transaction authorisation application is initiated. The authorisation of the user may be any kind of authorisation known to the person skilled in the art, i.e. multi-factor authentication, biometry based authentication or the like.

After the user has made the above selection and has been authenticated, a transaction authorisation confirmation according to the at least one selection parameter associated to the user and to the payment card used is transmitted to the card network. Responsive to the receiving the transaction authorisation confirmation by the card network, the transaction authorisation confirmation is processed. Processing of the transaction authorisation confirmation may be that a dedicated card present transaction selected by the user on the basis of the selection parameter is authorized and the corresponding financial transaction will be subsequently processed. Alternatively, the card network will indicate in a database that financial transactions matching with the at least one selection parameter selected by the user are considered as authorized and as such decline due to fraud prevention and detection mechanism shall occur. In addition, the transaction authorisation confirmation may be associated to the transaction as stored at the level of the issuer and/or at the level of the card network. As such the transaction authorisation confirmation may be used as authorisation evidence in case of a potential dispute regarding the transaction.

In another aspect of the present disclosure, the transaction authorisation application updates the list of selection parameters upon initiation by connecting to the card network. The transaction authorisation application may be initiated responsive to input by the user or by input sent to the user terminal from the card network or form the transaction terminal. In case the user, prior to initiating the transaction authorisation application, has initiated a card present transaction which requires authorisation by the user, the respect card present transaction will be listed as a selection parameter for selection by the user for authorisation.

In another aspect of the present disclosure, the transaction authorisation application is initiated responsive to input from the card network sent to the user terminal. According to this, the card network may, in case a card present transaction is likely to be declined or the card to be blocked because of the card-present transaction has been considered by the fraud detection system, prompt the user of the card for authorization of the respective card present transaction. The reason for decline / blocking may depend on the method used for fraud detection. Alternatively, the respective card present transaction may match with at least one selection parameter previously selected by the user and submitted to the card network. If this preauthorisation is still valid, the authorisation of the transaction by the user identifies the transaction as an authorised transaction and overrules the decision of the fraud detection system. The input sent from the card network to the user terminal may be in form of a notification message, prompting the user to open the transaction authorisation application in order to authorise a pending card present transaction. In this case, the transaction authorisation application may present the respective pending transaction for selection as a selection parameter. The respective pending transaction may be a card present transaction initiated by the user on the transaction terminal. After authorisation by the user, the respective pending transaction may be processed.

In yet another aspect of the present disclosure, the transaction authorisation application is initiated responsive to input from the card network sent to the user terminal responsive to decline of a card present transaction. In these cases, as the transaction has been declined, transaction authorisation application may present the characteristics of the declined transaction as a selection parameter identifying a similar transaction to be initiated in the future. As such, the transaction authorisation confirmation will be stored as preauthorisation in case the card present transaction is repeated. Storage of the preauthorisation may be limited to a certain period of time. According to this, a repeated card present transaction will only be considered as authorised, if the preauthorisation has not lapsed.

The present disclosure is also directed to a computer program product comprising program instructions for carrying out each of the method steps of the disclosure, when said product is executed on a computer.

Further, the present disclosure is directed to a computer readable medium storing program instructions, which, when executed by a processor of a computer cause the computer to perform each of the method steps of the disclosure.

One advantage that may be realized in the practice of some embodiments of the described methods is that financial transactions initiated and requested by a first user or owner of a joint account can be controlled, approved and authorized by a second user or owner of the joint account. Other technical advantages of the present disclosure will be readily apparent to one skilled in the art from the following description of preferred embodiments and the claims. Various embodiments of the present application obtain only a subset of the advantages set forth. No single advantage is critical to the embodiments. Any claimed embodiment may be technically combined with any other claimed embodiments.

### Brief description of the Drawings

The accompanying drawings illustrate exemplary embodiments of the disclosure and serve to explain, by way of example only, the principles of the disclosure.
FIG. 1 shows a block diagram of a four party card schemes used for processing transactions as currently used according to the prior art;
FIG. 2 shows a flowchart of the card present transaction authorising method; and
FIG.3 shows a block diagram of the four party card schemes according to an embodiment of the present disclosure used for processing transactions including the additional authorisation step.

### Detailed description

The present disclosure will now be described more fully hereinafter with reference to the accompanying figures, in which preferred embodiments are shown. The method, however, may be embodied in many different forms and should not be construed as limited to the embodiments set forth herein. It should be noted that these figures are intended to illustrate the general characteristics of the methods utilized in certain embodiments. However, the figures may not precisely reflect the precise structure or performance characteristic of any given embodiment. Moreover, in the figures similar reference numerals designate corresponding parts throughout the different views or embodiments.

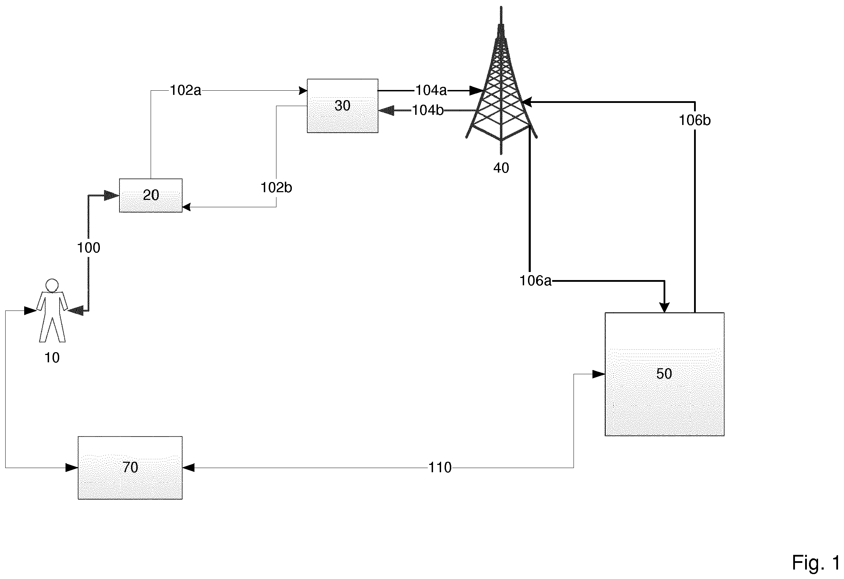

Fig. 1 is a block diagram illustrating the four party card scheme used for procession of card present transactions based on a payment card. The user 10 initiates at step 100 the process by providing his payment card to a transaction terminal 20, e.g. a point of sale terminal of a merchant for requesting a card payment for a purchase or an ATM machine for cash withdrawal. The transaction request is transmitted at step 102a from the transaction terminal 20 to the acquirer 30, e.g. the merchant's bank for authorisation. The acquirer 30 transmits at step 104a the request to the card network 40 which then transmits at step 406a the request to the card issuer 50 which processes the payment. The respective amount of the transaction is at step 110 either directly (when a debit card is used) or delayed (when a credit card is used) debited from the bank account 70 of the user 10. The issuer 50 transmits a transaction confirmation at step 106b to the card network 40 which then transmits, at step 104b, the transaction confirmation to the acquirer. The acquirer transmits the transaction confirmation at step 102b to the terminal 20, which generates a payment receipt for the user.

Fraud detection may be implemented on the level of any entity involved in the process. The first instance for fraud detection is the verification obtained by the merchant. This is typically the authentication of the user 10, e.g. by inspection of identification papers and/or additional means, such as PIN, signature and the like.

In addition to this, subsequent fraud detection means, as described above, are typically in place. As these subsequent fraud detection means are based on rules for estimating the probability that a certain transaction is not authorized by the user, false positive declines may occur. In addition, as these decision are taken in the background of the process, the decline of the transaction or the blocking of the card is somehow final and requires for the user to get in touch with the card network and/or the card issuer.

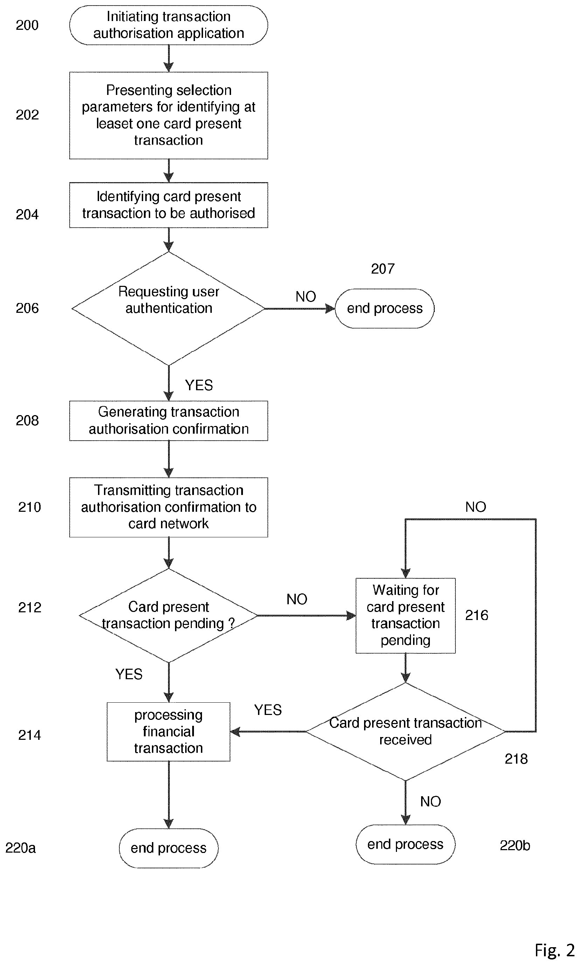

Fig 2 is a flowchart illustrating exemplarily the overall steps for authorising a card present transaction on a transaction terminal. In step 200 a transaction authorisation application is provided and executed on a user terminal.

At step 202 selection parameters for identifying at least one card present transaction are presented to the user for selection. The selection parameters comprise general parameters, predefined and stored within the transaction authorisation application but can also comprise selection parameters received from the card network. These selection parameters received from the card network identify actual card present transactions already initiated by the user, which require additional authorisation in order to be processed. In addition, the user can add further information related to a transaction to be processed manually or by using capturing means provided by the user terminal.

At step 204 the user selects at least one selection parameter identifying at least one card present transaction to be authorised. The selection made by the user can refer to an actual card present transactions already initiated by the user, which require additional authorisation in order to be processed based on selection parameters received from the card network. However, the identification by the user can also be an abstract identification directed to future card present transactions matching with the selection. Responsive to the identification by the user, at step 206 authentication of the user is requested by the application. The authentication may be based on any type of authentication known to the person skilled in the art and available for the respective user terminal. The invention is not limited to any particular type of authentication.

If authentication of the user fails, the process will end at step 207. If the user can be authenticated, a transaction authorisation confirmation will be generated at step 208. In this transaction authorisation confirmation authorisation for transactions identified by the selection parameters selected by the user is given. At step 210 the generated authorisation confirmation is transmitted the card network wherein preferably a secure communication channel is used. After receiving the transaction authorisation confirmation, the card network automatically checks, at step 212, whether a card present transaction requiring authorisation and matching with the transaction authorisation confirmation is pending or not. If a card present transaction requiring authorisation and matching with the transaction authorisation confirmation is pending, the method proceeds to step 214 and processes the respective financial transaction and the process ends at step 220a.

If no card present transaction requiring authorisation and matching with the transaction authorisation confirmation is pending, the transaction authorisation confirmation will be kept pending at step 216 and the card network will wait for card present transaction requiring authorisation and matching with the transaction authorisation confirmation. If a card present transaction requiring authorisation and matching with the transaction authorisation confirmation is received, at step 218, the method will proceed to step 214 and the financial transaction will be processed.

If no card present transaction matching with the transaction authorisation confirmation is received at step 218, the method either continues waiting at step 216, or the process will end at step 220b. The latter will take place for example when a predetermined period of time has lapsed and accordingly the transaction authorisation confirmation has expired.

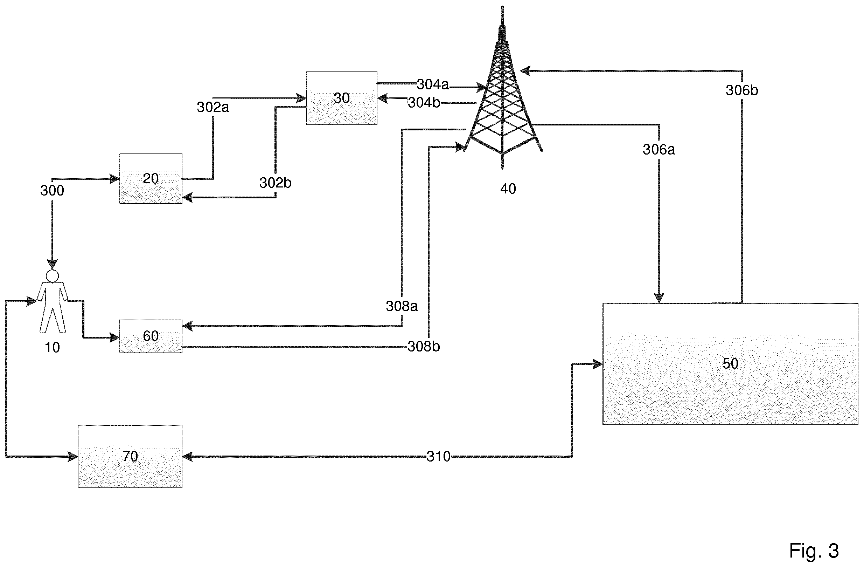

Fig. 3 is a block diagram illustrating the four party card scheme used for procession of financial transactions based on a payment card including the additional authorisation process. The user 10 initiates at step 300 the process by providing his payment card to a transaction terminal 20, e.g. a point of sale terminal of a merchant for requesting a card payment for a purchase or an ATM machine for cash withdrawal. The transaction request is transmitted at step 302a from the transaction terminal 20 to the acquirer 30, e.g. the merchant's bank for authorisation. The acquirer 30 transmits at step 304a the request to the card network 40. A transaction authorisation application executed on a user terminal 60 presents selection parameters to the user 10. These selection parameters may include parameters received in step 308a from the card network, which identify a pending card present transaction with requires authorisation. The data sent from the card network 40 to the user terminal 60 in step 308a may also trigger initiation of the transaction authorisation application on the user terminal 60.

After the user has made a selection of selection parameters identifying at least one card present transaction and after authentication of the user, as described in the context of figure 2, a transaction authorisation confirmation is generated and, at step 308b, transmitted to the card network 40.

The card network 40, responsive to receiving the transaction authorisation confirmation, checks for card present transaction requiring authorisation and matching with the transaction authorisation confirmation, as described with more detail in the context of figure 2. If a respective card present transaction is detected, the transaction request is transmitted to the issuer 50 for further processing.

The respective amount of the transaction is at step 310 either directly (when a debit card is used) or delayed (when a credit card is used) debited from the bank account 70 of the user 10. The issuer 50 transmits a transaction confirmation at step 306b to the card network 40 which then transmits, at step 304b, the transaction confirmation to the acquirer. The acquirer transmits the transaction confirmation at step 302b to the terminal 20, which generates a payment receipt for the user.

This description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art.

## Claims

1. A method for authorising card present transactions on a transaction terminal comprising:
initiating, on a user terminal, a transaction authorisation application;
presenting, by the transaction authorisation application, at least one selection parameter for identifying at least one card present transaction to be authorised;
prompting, responsive to identifying the at least one card present transaction to be authorised, authentication of a user for authorisation of the card present transaction;
transmitting, responsive to authorisation of the at least one card present transaction by the user, a transaction authorisation confirmation according to the at least one selection parameter to a card network; and
processing, responsive to receiving the transaction authorisation confirmation at the card network, the at least one card present transaction at the transaction terminal.

2. The method according to claim 1, wherein authentication of the user is based on multi-factor authentication.

3. The method according to any of claims 1 or 2, wherein the at least one selection parameter for identifying the at least one card present transaction to be authorised is a time frame in which the at least one card present transaction is initiated.

4. The method according to any of claims 1 to 3, wherein the at least one selection parameter for identifying the at least one card present transaction to be authorised is the transaction amount.

5. The method according to any of claims 1 to 4, wherein the at least one selection parameter for identifying the at least one card present transaction to be authorised identifies the transaction terminal, preferably by the location of the transaction terminal and / or a unique identifier of the transaction terminal.

6. The method according to claim 5, wherein the location and / or the unique identifier of the transaction terminal is manually added by the user or captured by the user terminal.

7. The method according to any of claims 1 to 6, wherein the transaction authorisation application is initiated responsive to input from the card network sent to the user terminal.

8. The method according to any of claims 1 to 7, wherein the at least one selection parameter identifies a card present transaction initiated by the user via the transaction terminal.

9. The method according to claim 8, wherein the card network, responsive to the card present transaction initiated by the user via the transaction terminal, sends an authorisation request to the transaction authorisation application.

10. The method according to claim 8 or 9, wherein the card present transaction initiated by the user was declined.

11. The method according to claim 10, wherein the card present transaction initiated by the user was declined because of false positive fraud detection.

12. The method according to any of claims 1 to 6; wherein the transaction authorisation application is initiated responsive to input by the user on the user terminal.

13. The method according to claim 12, wherein the transaction authorisation confirmation is valid for a certain time frame, a certain volume of transactions and/or a certain number of transactions, wherein the validity is based on a validity parameter associated to the transaction authorisation confirmation.

14. A computer program product comprising computer executable instructions embodied in a computer readable medium for performing steps any of the method claims 1 to 13.

15. A computer readable medium storing program instructions, which, when executed by a processor of a computer cause the computer to perform each of the method steps of claims 1 to 13.
